# EUROPÄISCHE PATENTSCHRIFT

(11) **EP 0 918 819 B1**
(45) Veröffentlichungstag und Bekanntmachung des Hinweises auf die Patenterteilung: **05.04.2000**
(21) Anmeldenummer: 97934437.1
(22) Anmeldetag: 15.07.1997
(51) Int. Cl.: C08L 1/02, C08J 5/18, A22C 13/00

(54) **VERFAHREN ZUR HERSTELLUNG VON CELLULOSEFORMKÖRPERN UND DIE MIT DIESEM VERFAHREN HERGESTELLTEN FORMKÖRPER SOWIE DEREN VERWENDUNG**
PROCESS FOR THE PRODUCTION OF CELLULOSE SHAPED BODIES, BODIES PRODUCED BY THIS PROCESS AND THE USE THEREOF
PROCEDE DE PRODUCTION DE CORPS FORMES EN CELLULOSE, CORPS FORMES AINSI PRODUITS ET LEUR UTILISATION

(30) Priorität: 19.08.1996 DE 19633405
(43) Veröffentlichungstag der Anmeldung: 02.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: WEIGEL, Peter, D-14532 Kleinmachnow (DE); FINK, Hans-Peter, D-14513 Teltow (DE); FRIGGE, Konrad, D-14478 Potsdam (DE)
(86) Internationale Anmeldenummer: DE9701527
(87) Internationale Veröffentlichungsnummer: WO9807781

(56) Entgegenhaltungen:
- EP-A- 0 712 889
- DE-A- 4 421 482

## Beschreibung

Die Erfindung betrifft Celluloseformkörper, die durch Extrusion einer Lösung von Cellulose in Aminoxiden hergestellt werden und durch Cellulosefasern verstärkt sind, und ein Verfahren zu ihrer Herstellung sowie deren Verwendung.

Celluloseformkörper aus Regeneratcellulose werden vorwiegend nach dem bekannten Viskoseverfahren hergestellt. Wegen der mit diesem Verfahren verbundenen hohen Umweltbelastung und der erheblichen Investitionskosten werden jedoch gegenwärtig weltweit erhebliche Anstregnungen unternommen, das Viskoseverfahren durch alternative Verfahren abzulösen. Hinsichtlich der Herstellung von Cellulosefasern ist ein aussichtsreiches Verfahren das Verspinnen von Lösungen der Cellulose in Aminoxiden. Aus der DE 28 30 685 sowie der DD 218 121 ist es bekannt, daß Cellulose in einem N-Methylmorpholin-N-Oxid (NMMNO)-Wasser-System löslich ist und durch Spinnen in ein meist aus wäßriger NMMNO-Lösung bestehendes Fällbad zu textilen Fasern verarbeitet werden kann. Nach diesem Verfahren hergestellte Produkte sind bereits auf dem Markt.

Verfahren zur Herstellung von nichtfasrigen Celluloseformkörpern aus NMMNO-Lösungen, insbesondere von Folien als Verpackungsmittel von Lebensmitteln und speziell auch in Form von Schlauchfolien als Wursthüllen, sind ebenfalls bekannt. In der EP 0 662 283 und in der WO 95/07811 wird die Schlauchfolie über einen Dorn bzw. über eine aus mehreren kreisförmigen Scheiben bestehende Vorrichtung, die sich im Bereich des Luftspalts zwischen Ringdüse und Fällbad befinden, abgezogen. In dem in der DE 44 21 482 beschriebenen Verfahren wird der aus der Ringdüse austretende Folienschlauch durch den Druck der in seinem Inneren vorhandenen Flüssigkeitssäule und der darüberliegenden Luftsäule stabilisiert und aufgeweitet. Dieses Verfahren kommt somit dem bekannten Folienblasverfahren, das insbesondere bei der Herstellung von Folien aus Thermoplasten angewendet wird, am nächsten.

Eine Verbesserung der Materialeigenschaften von Formkörpern aus einem polymeren Werkstoff wird häufig durch die Herstellung eines Verbundes, der aus einer polymeren Matrix und einem Fasermaterial besteht, erreicht. So werden Cellulosefolien, speziell Wursthüllen, häufig mit Papier, Vlies oder Gewebe verstärkt (DE 23 38 418). Damit wird u.a. das leichte Weiterreißen von vorhandenen Rissen verhindert, und Unterschiede der Festigkeit längs und quer zur Maschinenlaufrichtung werden weitgehend ausgeglichen. Die Herstellung derartiger Verbunde ist jedoch relativ aufwendig, insbesondere beim Einsatz des Aminoxidverfahrens.

Ausgehend hiervon ist es die Aufgabe der vorliegenden Erfindung, ein Verfahren zur Herstellung von Celluloseformkörpern mit verbesserten Festigkeitseigenschaften anzugeben, das insbesondere auch die Eigenschaften von Cellulosefolien positiv beeinflußt.

Die Aufgabe wird in bezug auf das Verfahren durch die kennzeichnenden Merkmale des Anspruchs 1, hinsichtlich der Formkörper selbst durch die kennzeichnenden Merkmale des Anspruchs 9 gelöst. Die Unteransprüche zeigen vorteilhafte Weiterbildungen auf. Die Verwendung der erfindungsgemäß hergestellten Cellulosefolien ist im Patentanspruch 11 gekennzeichnet.

Das erfindungsgemäße Verfahren zeichnet sich dadurch aus, daß die auszufällende Lösung, eine in einem Aminoxid-/Wassersystem gelöste Cellulose, zusätzlich Cellulosefasern, vorzugsweise Kurzfasern, enthält. Nach Extrusion bzw. Fällung dieses Gemisches entsteht dabei ein faserverstärkter Verbundwerkstoff. Dieser Verbund aus hochorientierten Cellulosefasern in einer unaxial oder biaxial orientierten Cellulosematrix zeichnet sich durch eine erhöhte Festigkeit und einstellbare anisotrope mechanische Eigenschaften aus.

Bei Verbunden, bei denen Fasern in eine Polymermatrix eingebettet sind, besteht häufig die Schwierigkeit, daß die adhäsiven Kräfte zwischen Faser und Matrix sehr gering sind und dadurch die angestrebte Festigkeit nicht erreicht wird. Häufig wird die notwendige Haftung zwischen Faser und Matrix nur durch den Einsatz von Haftvermittlern erreicht, was mit einem zusätzlichen Aufwand im Herstellungsverfahren verbunden ist. Bei dem erfindungsgemäßen Verfahren besteht dieses Problem von vornherein nicht, weil die Fasern in der Celluloselösung an der Oberfläche gequollen und/oder geringfügig gelöst werden, wodurch sie bei der Koagulation fest in die Cellulosematrix eingebettet werden. Es hat sich dabei als günstig herausgestellt, wenn der Anteil der Fasern am Gesamtgehalt der Cellulose mindestens 5 % und höchstens 90 % , bevorzugt 20 % bis 60 % beträgt. Die Cellulosefasern enthaltende Celluloselösung kann dadurch erhalten werden, daß in die Celluloselösung zusätzlich Fasern eingebracht werden oder aber, daß die Cellulose bei der Herstellung der Cellulosefasern nicht vollständig aufgelöst wird.

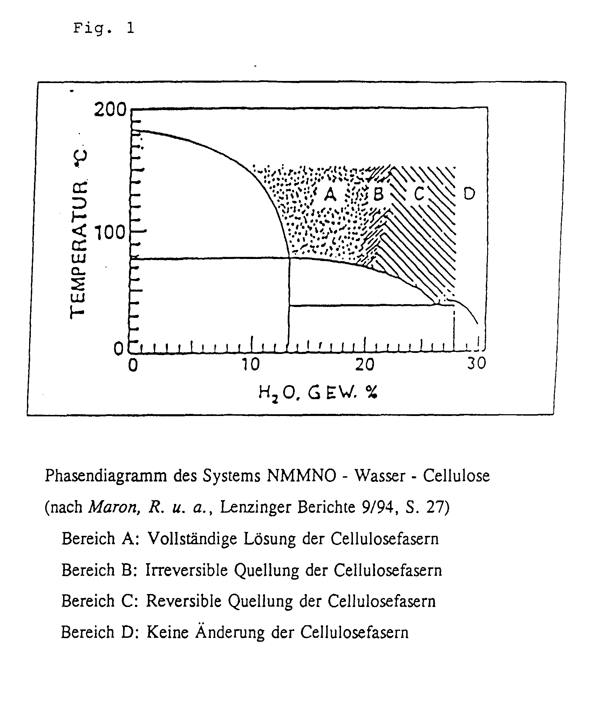

Das vollständige Auflösen der eingebrachten Fasern kann durch Herabsetzung der Fähigkeit des Systems NMMNO-Wasser-Cellulose, weitere Cellulose zu lösen, verhindert werden. Aus dem Phasendiagramm in Bild 1 ist ersichtlich, daß diese Fähigkeit durch Erniedrigen der Temperatur bzw. durch Vergrößern des Wasseranteils in der Lösung herabgesetzt werden kann. Erfindungsgemäß kann damit auch der Grad der Quellung bzw. des oberflächlichen Lösens der in die Lösung eingebrachten Fasern gesteuert werden. Dies bietet eine zusätzliche Möglichkeit zur Variation der Eigenschaften der Formkörper. Diese Vorteile bestehen beim Viskoseverfahren nicht, weil hier die nichtderivarisierte Cellulose nicht gelöst wird.

Das erfindungsgemäße Verfahren ist sowohl als Gießverfahren wie auch bei der Extrusion einsetzbar.

Das Verfahren ist insbesondere auch zur Herstellung von Schlauchfolien und von Flachfolien geeignet.

Für den Cellulose-Cellulosefaser-Verbund sind praktisch alle Arten von Cellulosekurzfasern einsetzbar, wie Chemiezellstoffe, Regeneratfasern oder native Fasern, z.B. Baumwollinters, Flachs, Hanf, Bast, Jute, Sisal, Ramie und Manila. Dabei ist natürlich der Einsatz hochfester Fasern besonders vorteilhaft. Die Faserlänge liegt in Abhängigkeit von der Faserdicke bevorzugt im Bereich von wenigen um bis zu einigen mm. Insbesondere ist die Verwendung von Fasern mit möglichst kleinem Titer günstig, zum einen wegen der großen spezifischen Oberfläche der Faser, zum anderen, weil bei der Folienherstellung der Faserdurchmesser in direktem Zusammenhang mit der minimal erreichbaren Foliendicke steht. Daher sind erfindungsgemäß die außerordentlich dünnen und hochfesten Fasern der Bakteriencellulose zur Faserverstärkung der Celluloseformkörper, spezielle der Folien, besonders gut geeignet.

Besonders geeignet ist das erfindungsgemäße Verfahren zur Herstellung von Schlauchfolien mittels eines Folienblasverfahrens. Dabei wird durch Extrusion durch eine Ringdüse eine Schlauchfolie hergestellt. Ein derartiges Verfahren ist in der bereits erwähnten DE 44 21 482 beschrieben.

Die mit diesem Verfahren hergestellten Formkörper weisen einen ausgezeichneten E-Modul von 1.200 bis 15.000 MPa auf. Besonders geeignet sind diese Folien für die Verpackung von Lebensmitteln. Verfahrensbedingt liegen dabei die E-Module der Formkörper, hergestellt nach dem Gießverfahren, im unteren Bereich, bevorzugt zwischen 1.200 und 6.000 MPA und die mittels Extrusionsverfahren hergestellten Formkörper im Bereich von 5.000 bis 10.000 MPA.

Die Erfindung wird nachstehend anhand der Ausführungsbeispiele näher erläutert.

### Beispiel 1 (1. Vergleichsbeispiel)

Einer Lösung von 9 % Cellulose in NMMNO-Monohydrat (Verhältnis NMMMO/Wasser = 87/13) wird Wasser zugesetzt, bis das Verhältnis NMMNO/Wasser 82/18 beträgt. Die Lösung wird durch Ausstreichen auf einer Glasplatte und anschließendes Koagulieren in Wasser zu einer Gießfolie verarbeitet.
Die Folie besitzt nach dem Trocknen einen Modul von 810 MPa.

### Beispiel 2

Wie Beispiel 1 mit einem Zusatz von 30 % gemahlenem Zellstoff, bezogen auf die gelöste Cellulose, zur Celluloselösung.
Die Folie besitzt nach dem Trocknen einen Modul von 1240 MPa.

### Beispiel 3

Wie Beispiel 2 mit einem Zusatz von Flachs anstelle von Zellstoff zur Celluloselösung. Die Folie besitzt nach dem Trocknen einen Modul von 2350 MPa.

### Beispiel 4

Wie Beispiel 2 mit einem Zusatz von Bakteriencellulose anstelle von Zellstoff zur Celluloselösung. Die Folie besitzt nach dem Trocknen einen Modul von 1620 MPa.

### Beispiel 5

Wie Beispiel 3 unter Verminderung des Wassergehaltes der Lösung auf ein Verhältnis NMMNO/Wasser von 85/15. Die Folie besitzt nach dem Trocknen einen Modul von 2100 Mpa.

### Beispiel 6 (2. Vergleichsbeispiel)

Eine Lösung entsprechend Beispiel 1 wird durch eine Ringdüse über einen Luftspalt in ein wäßriges Fällbad extrudiert.
Die Schlauchfolie besitzt nach dem Trocknen einen Modul von 1900 MPa.

### Beispiel 7

Wie Beispiel 6 mit einem Zusatz von 30 % gemahlenem Zellstoff, bezogen auf die gelöste Cellulose, zur Celluloselösung.
Die Schlauchfolie besitzt nach dem Trocknen einen Modul von 5400 MPa.

## Patentansprüche

1. Verfahren zur Herstellung von Schlauchfolien durch Ausfällen einer Celluloselösung, die eine in einem Aminoxid-/Wassersystem gelöste Cellulose enthält, in ein Fällbad,
**dadurch gekennzeichnet,**
daß in die Lösung zusätzlich Cellulosefasern eingebracht werden, wobei das Auflösen der Fasern durch Herabsetzung der Lösefähigkeit des Aminoxid-/Wassersystems verhindert wird und, daß durch Extrusion durch eine Ringdüse in einem Folienblasverfahren eine Schlauchfolie hergestellt wird.

2. Verfahren nach Anspruch 1,
dadurch gekennzeichnet, daß die Herabsetzung der Lösefähigkeit durch Zugabe von Wasser und/oder Temperaturerniedrigung erreicht wird.

3. Verfahren nach mindestens einem der Ansprüche 1 oder 2, dadurch gekennzeichnet, daß der Wasseranteil und/oder die Temperatur des Systems Aminoxid/-Wasser/Cellulose so eingestellt, daß die in der Celluloselösung enthaltenen Cellulosefasern an ihrer Oberfläche gequollen und/oder teilweise gelöst werden.

4. Verfahren nach mindestens einem der Ansprüche 1 bis 3, dadurch gekennzeichnet, daß der Anteil der Cellulosefasern am Gesamtgehalt der Cellulose in der Lösung mindestens 5% und höchstens 90% beträgt.

5. Verfahren nach Anspruch 4,
dadurch gekennzeichnet, daß der Anteil mindestens 20% und höchstens 60% beträgt.

6. Verfahren nach mindestens einem der Ansprüche 1 bis 5, dadurch gekennzeichnet, daß die in die Celluloselösung eingebrachten Cellulosefasern aus Chemiezellstoff, Regeneratfasern oder Naturfasern wie Flachs, Hanf, Jute, Bast, Sisal, Ramie oder Manila ausgewählt werden.

7. Verfahren nach Anspruch 6,
dadurch gekennzeichnet, daß als Cellulosefasern Bakteriencellulose eingesetzt wird.

8. Verwendung der Celluloseformkörper, hergestellt nach einem Verfahren nach mindestens einem der Ansprüche 1 bis 7, als Verpackungsmittel, z.B. für Lebensmittel, insbesondere als Wursthüllen.

## Claims

1. Process for the production of tubular membranes by precipitation of a cellulose solution, which contains cellulose dissolved in an amine oxide/ water system, into a regenerating bath,
**characterised in that**
cellulose fibres are also introduced into the solution, the dissolving of the fibres being prevented by reducing the dissolving capacity of the amine oxide-/water system and in that a tubular membrane is produced in a film blowing process by extrusion through an annular nozzle.

2. Process according to claim 1, characterised in that the reduction in the dissolving capacity is achieved by adding water and/or by lowering the temperature.

3. Process according to at least one of the claims 1 or 2, characterised in that the quantity of water and/or the temperature of the amine oxide-/water/cellulose system is adjusted such that the cellulose fibres contained in the cellulose solution are swollen on their surface and/or partly dissolved.

4. Process according to at least one of the claims 1 to 3, characterised in that the proportion of cellulose fibres to the entire content of cellulose in the solution is at least 5% and at most 90%.

5. Process according to claim 4, characterised in that the proportion is at least 20% and at most 60%.

6. Process according to at least one of the claims 1 to 5, characterised in that the cellulose fibres introduced into the cellulose solution are selected from chemical conversion pulp, regenerated fibres or natural fibres such as flax, hemp, jute, bast, sisal, ramie or manila.

7. Process according to claim 6, characterised in that bacterial cellulose is used as cellulose fibres.

8. Use of the cellulose shaped bodies, produced according to a process according to at least one of the claims 1 to 7, as packing means, e.g. for food, especially as sausage skins.

## Revendications

1. Procédé de production de feuilles tubulaires par précipitation d'une solution de cellulose qui contient une cellulose dissoute dans un système aminoxyde/eau, dans un bain de précipitation,
caractérisé en ce qu'
on introduit dans la solution des fibres de cellulose supplémentaires, la dissolution des fibres étant empêchée par un abaissement du pouvoir dissolvant du système aminoxyde/eau, et en ce que l'on produit une feuille tubulaire par extrusion à travers une buse annulaire dans un procédé de soufflage à la feuille.

2. Procédé selon la revendication 1,
caractérisé en ce qu'
on obtient l'abaissement du pouvoir dissolvant par addition d'eau et/ou par abaissement de la température.

3. Procédé selon au moins une des revendications 1 ou 2,
caractérisé en ce qu'
on règle la proportion d'eau et/ou la température du système aminoxyde/eau/cellulose de manière que les fibres de cellulose contenues dans la solution de cellulose soient gonflées à leur surface et/ou partiellement dissoutes.

4. Procédé selon au moins une des revendications 1 à 3,
caractérisé en ce que
la proportion des fibres de cellulose par rapport à la teneur totale en cellulose dans la solution s'élève à au moins 5 % et au plus 90 %.

5. Procédé selon la revendication 4,
caractérisé en ce que
cette proportion s'élève à au moins 20 % et au plus à 60 %.

6. Procédé selon au moins une des revendications 1 à 5,
caractérisé en ce que
les fibres de cellulose introduites dans la solution de cellulose sont choisies parmi la pâte cellulosique chimique, les fibres régénérées ou les fibres naturelles comme le lin, le chanvre, le jute, le raphia, le sisal, la ramie ou le chanvre de Manille.

7. Procédé selon la revendication 6,
caractérisé en ce qu'
on utilise comme fibres de cellulose de la cellulose bactérienne.

8. Utilisation des articles moulés en cellulose produits dans un procédé selon au moins une des revendications 1 à 7, comme matériau d'emballage, par exemple pour produits alimentaires, en particulier comme enveloppes pour saucisses.
